# EUROPEAN PATENT APPLICATION

(11) **EP 2 006 857 A1**
(43) Date of publication of application: **24.12.2008**
(21) Application number: 08158388.2
(22) Date of filing: 17.06.2008
(51) Int. Cl.: G11B 27/30

(54) **Image processing apparatus, image processing method and program**

(30) Priority: 19.06.2007 JP 2007161534
(71) Applicant: Sony Corporation, Tokyo 108-0075 (JP)
(72) Inventor: Kondo, Tetsujiro, Tokyo 108-0075 (JP); Watanabe, Tsutomu, Tokyo 108-0075 (JP)
(74) Representative: Beder, Jens

(57) **Abstract**

An image signal processing apparatus controls display of a moving image and a still image. The image signal processing apparatus includes obtaining means for obtaining a moving image content constituted of a moving image and a still image content constituted of one or more still images, generating means for generating link information indicating a correlation between imaging timings of the moving image content and the still image content, and reproducing means for displaying the moving image content and the still image content correlated each other on a same screen, based on the link information.

## Description

### Background of the Invention

### 1. Field of the Invention

The present invention relates to an image processing apparatus, an image processing method and a program, and more particularly to an image processing apparatus capable of displaying a correlated moving image and still images of the same object captured at same timings, and to an image processing method and a program.

### 2. Description of Related Art

There already exist a video camera capable of capturing still images also while continuously capturing a moving image. There also exist a technology of generating still images from a captured moving image and reproducing continuously captured still images which are time sequentially coupled, as if moving images are reproduced.

As a technology of correcting a motion blur of an object and an out-of-focus blur formed in a captured image, there are a so-called adaptive classification process (e.g., refer to Japanese Patent Application Publication No. 2005-328117, Patent Document 1), an ET process (a real world estimation process) (e.g., refer to Japanese Patent Application Publication No. 2006-24192, Patent Document 2) and the like (respectively to be described later). There is also a technology of converting a resolution degree of an image by utilizing the adaptive classification process to make the image have a high quality (e.g., refer to Japanese Patent Publication No. 3326879, Patent Document 3).

However, when still images are captured at the same timings while a moving image is captured, for example, an angle of view of the moving image may change unnaturally because of focusing on the angle of view of still images. Conversely, capturing timings of still images may be missed because of focusing on a moving image.

Further, as described above, there exist the technology of capturing a still image at the same timing while the moving image is captured and the technology of generating a moving image from a still image, and vice versa, as described above. However, no proposal is made in that both a moving image and a still image are displayed at the same timing by correlating imaging timings, or a moving image is corrected or edited by using a still image, and vice versa.

### Summary of the Invention

The present invention is made in view of the circumstances described above, and allows a moving image and a still image to be displayed by correlating imaging timings of the moving image and still image.

According one aspect of the present invention, there is provided an image processing apparatus for controlling display of a moving image and a still image. The image processing apparatus includes obtaining means for obtaining a moving image content constituted of a moving image and a still image content constituted of one or more still images, generating means for generating link information indicating a correlation between imaging timings of the moving image contents and the still image contents, and reproducing means for displaying the moving image contents and the still image contents on the same screen by correlating the contents, based on the link information.

The generating means may generate the link information based on degree of similarity between the still image of the still image contents and each frame image of the moving image contents.

In accordance with the link information, the reproducing means may display one of the moving image content and the still image content designated as a main image and the other designated as a sub image corresponding to a reproducing timing of the main image on the same screen.

The image processing apparatus according to an aspect of the present invention may further include image correction processing means for performing an image correction process on either one of the moving image content and the still image content, by using the moving image content and the still image content.

The image processing apparatus according to an aspect of the present invention may further include setting means for setting a correction parameter in the image correction process.

According to an aspect of the present invention, there is provided an image signal processing method of an image signal processing apparatus for controlling display of a moving image and a still image. The image signal processing method includes steps of obtaining a moving image content constituted of a moving image and a still image content constituted of one or more still images, generating link information indicating a correlation between imaging timings of the moving image content and the still image content, and displaying the moving image contents and the still image contents on the same screen by correlating the contents, based on the link information.

According to an aspect of the present invention, there is provided a program for controlling an image processing apparatus which controls display of a moving image and a still image. The program causes a computer to perform processes including steps of obtaining a moving image content constituted of a moving image and a still image content constituted of one or more still images, generating link information indicating a correlation between imaging timings of the moving image content and the still image content, and displaying the moving image content and the still image content on the same screen by correlating the contents, based on the link information.

According to an aspect of the present invention, the link information indicating a correlation between imaging timings of the moving image content constituted of a moving image and the still image content constituted of one or more still images is generated, and the moving image content and the still image content correlated with each other are displayed on the same screen based on the link information.

According to an aspect of the present invention, moving images and still images may be displayed with their imaging timing being correlated.

### Brief Description of the Drawings

Fig. 1 is a block diagram showing an example of the structure of an image processing system to which the present invention is applied;
Fig. 2 is a block diagram showing an example of the structure of an imaging apparatus shown in Fig. 1;
Fig. 3 is a block diagram showing an example of the structure of a recording/reproducing editing apparatus shown in Fig. 1;
Fig. 4 is a block diagram showing an example of the structures of a moving image editing unit 56 and a still image editing unit 57 shown in Fig. 3;
Figs. 5A to 5F are diagrams explaining scaling correction;
Figs. 6A to 6F are diagrams explaining imaging position correction;
Figs. 7A to 7D are diagrams showing display examples of a moving image and still images in sync reproduction;
Figs. 8A to 8C are diagrams showing display examples during edition setting;
Fig. 9 is a flow chart illustrating a content reproducing process;
Fig. 10 is a flow chart illustrating a content editing process; and
Fig. 11 is a block diagram showing an example of the structure of a general-purpose computer.

### Detailed Description of the Embodiments

In the following description of embodiments of the present invention, the correspondence relation between elements of the present invention and the embodiments described in the specification and drawings is exemplified as follows. This description is made for confirming that the embodiments supporting the present invention are described in the specification or the drawings. Therefore, even if there is an embodiment described in the specification or the drawings but not described in "Detailed Description of the Embodiments" as the one corresponding to an element of the present invention, that does not mean that the embodiment does not correspond to the element. Conversely, even if an embodiment is described in the specification as the one corresponding to an element, that does not means that the embodiment does not correspond to an element other than the element.

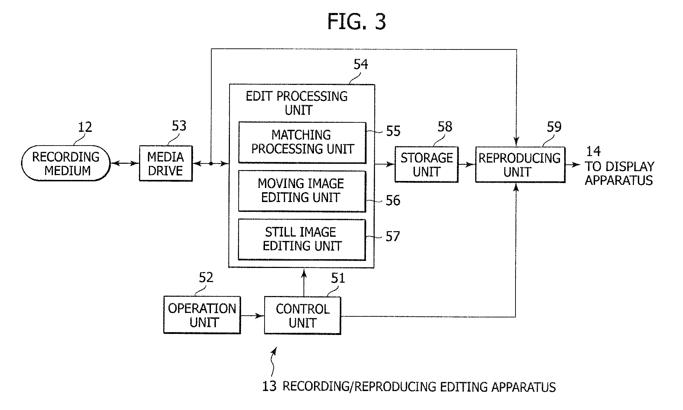

According to one aspect of the present invention, an image processing apparatus (e.g., a recording/reproducing editing apparatus 13 shown in Fig. 3) for controlling a display of a moving image and a still image, includes obtaining means (e.g., a media drive 53 shown in Fig. 3) for obtaining moving image contents constituted of moving images and still image contents constituted of one or more still images, generating means (e.g., a matching processing unit 55 shown in Fig. 3) for generating link information indicating a correlation between imaging timings of the moving image contents and the still image contents, and reproducing means (e.g., a reproducing unit 59 shown in Fig. 3) for displaying the moving image contents and the still image contents on a same screen by correlating the contents, based on the link information.

The image signal processing apparatus according to a aspect of the present invention may further includes image correction processing means (e.g., a moving image editing unit 56 and a still image editing unit 57 shown in Fig. 3) for performing an image correction process to either one of the moving image contents and the still image contents, by using the moving image contents and the still image contents.

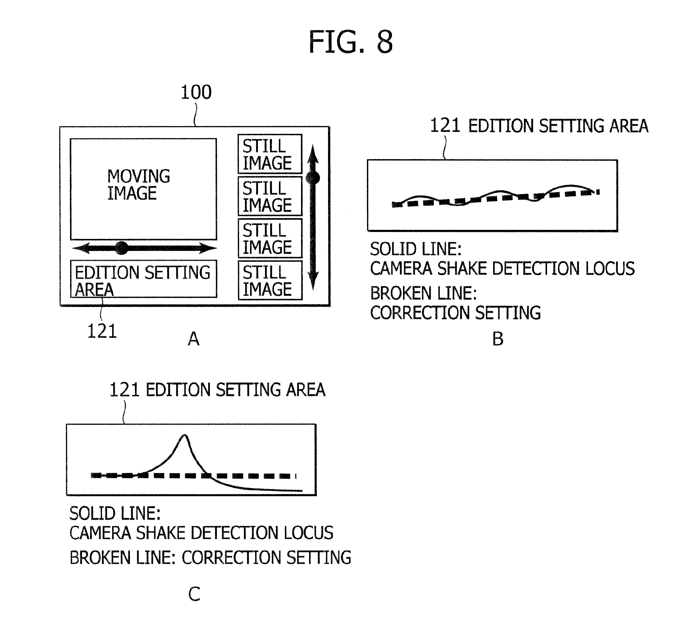

The image signal processing apparatus according to an aspect of the present invention may further includes setting means (e.g., an operation unit 52 shown in Fig. 3 and an edit setting area 121 in Fig. 8) for setting a correction parameter for the image correction process.

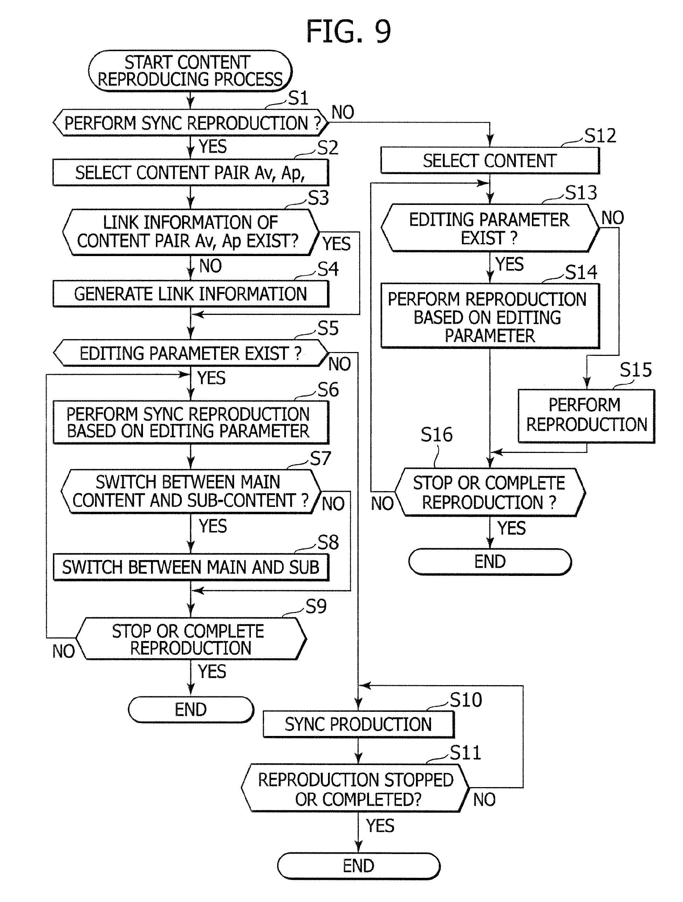

According to another aspect of the present invention, an image processing method and a program include steps of obtaining (e.g., Step S2 in Fig. 9) moving image contents constituted of moving images and still image contents constituted of one or more still images, generating (e.g., Step S4 in Fig. 9) link information indicating a correlation between imaging timings of the moving image contents and the still image contents, and displaying (e.g., Step S6 in Fig. 9) the moving image contents and the still image contents on the same screen by correlating the contents, based on the link information.

Specific embodiments to which the present invention is applied are described in details with reference to the drawings.

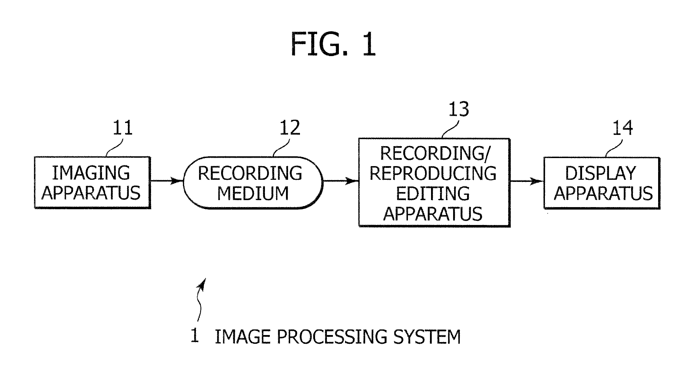

Fig. 1 shows an example of the structure of an image processing system to which the present invention is applied. The image processing system 1 includes an imaging apparatus 11 for imaging a moving image and a still image, a recording medium 12 for recording a captured moving image and still image, a recording/reproducing editing apparatus 13 for reading moving images and still images from the recording medium 12 to display both images by correlating them, and a display apparatus 14 for displaying the correlated moving images and still images.

The imaging apparatus 11 is a camera capable of capturing a still image at any timing while a moving image is taken, and a moving image signal and a still image signal obtained as the imaging results are recorded in the recording medium 12. The moving image signal and still image signal may be recorded in the same recording medium 12 or may be recorded in different recording media 12 respectively. In the following, the moving image signal and still image signal imaged at the same timing are referred to as "a pair of correlated moving image signals and still image signals". It is assumed that the still image signal correlated with the moving image signal contains one or more still images.

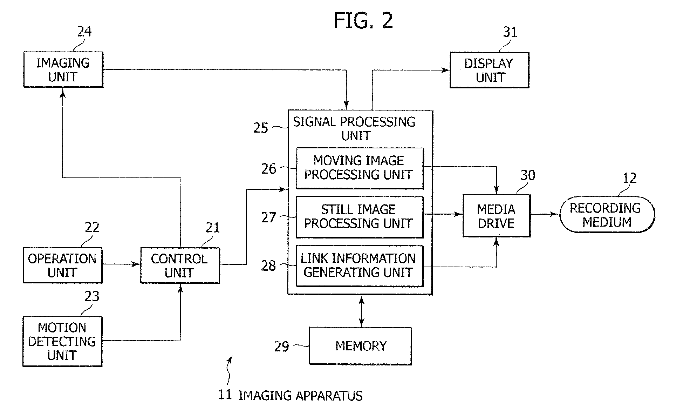

Fig. 2 shows an example of the detailed structure of the imaging apparatus 11. The imaging apparatus 11 includes a control unit 21 for controlling the entirety of the imaging apparatus 11, an operation unit 22 through which an operation from a user is inputted, a motion detecting unit 23 for detecting a motion of the imaging apparatus 11, an imaging unit 24 for taking images of an object and generating an image signal, a signal processing unit 25 for performing predetermined processing on an image signal outputted from the imaging unit 24, a memory 29 which is used as a working area of the signal processing unit 25, a media drive 30 for recording a moving image signal and a still image signal outputted from the signal processing unit 25 in the recording medium 12, and a display unit 31 which functions as a finder by displaying an image to be taken and functions as a monitor by displaying a captured image.

The control unit 21 controls each unit in the imaging apparatus 11 based on an operation signal corresponding to a user operation (video recording start operation, video recording completion operation, still image capturing shutter operation, zoom-in operation, zoom-out operation, various setting operations and the like) inputted from the operation unit 22. The operation unit 22 is constituted of buttons and switches provided on the housing of the imaging apparatus 11, a touch panel provided on the surface of the display unit 31, and the like. The operation unit 22 receives a user operation and outputs a corresponding operation signal to the control unit 22.

The motion detecting unit 23 is constituted of a gyro sensor or the like, and detects a motion of the imaging apparatus 11 caused by camera shake or the like, to notify the detection results to the control unit 21. The imaging unit 24 includes a zoom lens, a shutter mechanism, an iris mechanism, and a photodiode such as a CCD.

The signal processing unit 25 includes a moving image processing unit 26, a still image processing unit 27 and a link information generating unit 28. Under control of the control unit 21, the moving image processing unit 26 generates an encoded moving image signal from an image signal inputted from the imaging unit 24, by an encoding scheme such as DVI and MPEG2. Under control of the control unit 21, the still image processing unit 27 generates an encoded still image signal from an image signal inputted from the imaging unit 24, by an encoding scheme such as JPEG. Under control of the control unit 21, the link information generating unit 28 generates link information representative of imaging timings of the correlated moving image signals and still image signals which are paired. Specifically, the link information generating unit correlates each still image to a frame number and a time code of a moving image in response to a shutter timing, and generates the link information indicating a frame of the moving image which corresponds to each still image (whether a frame has the nearest imaging timing). The generated moving image signal, still image signal and link information are recorded in the recording medium 12 by the media drive 30. Also recorded in the recording medium 12 is information indicating a change of a focal distance of the zoom lens during capture of a moving image and information indicating a motion (such as camera shake) of the imaging apparatus 11.

Reverting to Fig. 1, the recording/reproducing editing apparatus 13 reads a pair of correlated moving image signals and still image signals from the recording medium 12, and reads a link information corresponding to both signals if the like information is recorded, whereas if not recorded, generates link information. The recording/reproducing editing apparatus 13 makes the display apparatus 14 display a pair of correlated moving image signals and still image signals based on the link information. Further, the recording/reproducing editing apparatus 13 performs an editing process on the moving image signals by using the moving image signals and still image signals, and performs an editing process on the still image signal by using the moving image signals and still image signals.

The editing process for the moving image signals and still image signals is image signal processing such as image quality improvement correction (camera shake correction, motion blur correction, out-of-focus blur correction, noise elimination correction, color tone correction, and resolution conversion correction), scaling (scale up/scale down) correction, rotation correction, imaging position correction, and imaging timing correction). Imaging timing correction in particular is image processing in which a captured still image is corrected by using still images taken before/ after the captures still image, or a corresponding moving image, to obtain a still image as if the still image is captured at a slightly earlier or later timing than the actual shutter timing.

Fig. 3 shows an example of the detailed structure of the recording/reproducing editing apparatus 13. The recording/reproducing editing apparatus 13 includes a control unit 51 for controlling the entirety of the recording/reproducing editing apparatus 13, an operation unit 52 through which an operation from a user is inputted, a media drive 53 for reading moving image signals and still image signals and the like from the recording medium 12, an edit processing unit 54 for performing an editing process on read moving image signals and still image signals and the like, a storage unit 58 for storing process results by the edit processing unit 54, and a reproducing unit 59 for displaying the edited moving image signals and still image signals stored in the storage unit 58 on a screen of the display apparatus 14 by correlating the signals.

The control unit 51 controls each unit of the recording/reproducing editing apparatus 13 in response to an operation signal corresponding to a user operation (reproduction operation for the moving image signals or still image signal, parameter setting operation for various editing processes, and the like) inputted from the operation unit 52. The control unit 51 also controls display of GUI, which is used for various operations and settings. In accordance with setting values designated by a user through use of the operation unit 52 and GUI, the control unit 51 makes the moving image editing unit 56 of the edit processing unit 54 execute image quality improvement correction. The operation unit 52 outputs to the control unit 51, an operation signal corresponding to a user operation for GUI or the like displayed on the display apparatus 14.

The edit processing unit 54 includes a matching processing unit 55, a moving image editing unit 56 and a still image editing unit 57. The edit processing unit 54 outputs edit results to the storage unit 58, but the edit results may be outputted to the media drive 53 to be recorded in the recording medium 12.

If the link information is not recorded in a pair of moving image signals and still image signals which are recorded in the recording medium 12, the matching processing unit 55 generates link information for the pair of moving image signals and still image signals. Specifically, a difference between each still image and each frame of a moving image (more in detail, a total sum of absolute values of differences between corresponding pixels) is calculated, a frame of the moving image having a smallest difference with respect to each still image is detected, and it is judged that an image capturing timing of the detected frame is nearest to an image capturing timing of the still image.

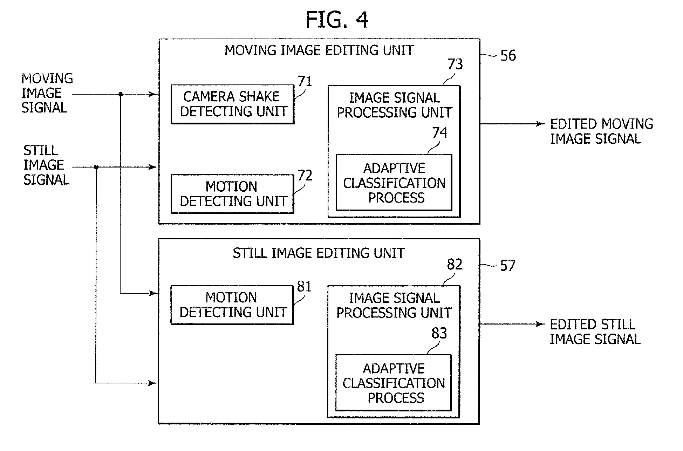

Fig. 4 shows examples of the structures of the moving image editing unit 56 and still image editing unit 57. In accordance with information representative of a motion (such as camera shake) of the imaging apparatus 11 recorded in the recording medium 12, an image signal processing unit 73 of the moving image editing unit 56 performs image quality improvement correction such as camera shake correction, scaling correction, imaging position correction, and the like on the moving image signal.

When the information indicating a motion (such as camera shake) of the imaging apparatus 11 is not recorded in the recording medium 12, a motion detecting unit 72 detects a motion (such as camera shake) over all frames of the moving image, for example, by a representative point matching method.

For example, an adaptive classification process and an ET process (real world estimation process) may be performed to the image improvement correction. In the still image editing unit 57, a motion detecting unit 81 detects a motion in an image, and an image signal processing unit 82 performs image quality improvement correction such as motion blur correction, out-of-focus blur correction, resolution conversion, and imaging timing correction, respectively on the still image signal. The adaptive classification process and ET process may be performed to the image quality improvement correction and imaging timing correction. However, the process to be used for each correction is not limited to the adaptive classification process and ET process, but other various processes may also be used if the processes have similar objects.

The adaptive classification process is a process described, for example, also in Patent Document 1 and Patent Document 3. With this process, a pixel (notice pixel) to be corrected or generated is corrected and calculated by using a coefficient in accordance with the spatial feature of the pixel. Specifically, for example, a pixel group (first tap) constituted of a plurality of pixels positioned near around the notice pixel is set, and in accordance with a combination of the plurality of pixels constituting the first tap, a class (a plurality of classes are prepared beforehand) indicating the spatial features to which the notice pixel belongs is determined. Further, a pixel group (second tap) constituted of a plurality of pixels positioned near around the notice pixel (including not only a space direction but also a time direction, and including not only the frame of a moving image but also a still image) is set, and a value of the notice pixel is determined through calculation using the plurality of pixels constituting the set second tap and a coefficient prepared in advance in accordance with the determined class. A coefficient used for calculation of blur correction can be obtained by learning the relation between the values of pixels of blurred images and the values of pixels of not blurred images per each class. A coefficient used at calculation of resolution conversion can be obtained by learning the relation between the values of pixels of a teacher image corresponding to an image to be newly generated and the values of pixels of a student image corresponding to the image before conversion, per each class.

The ET process (real world estimation process) is a process described, for example, also in the Patent Document 2. With this process, a blur model in a real world for generating an image with blur from an image without blur is structured by considering optical integration characteristics of light received at the imaging device, and a true image is obtained by applying reverse conversion of the conversion corresponding to the blur model, to the blur image, and the blur is removed.

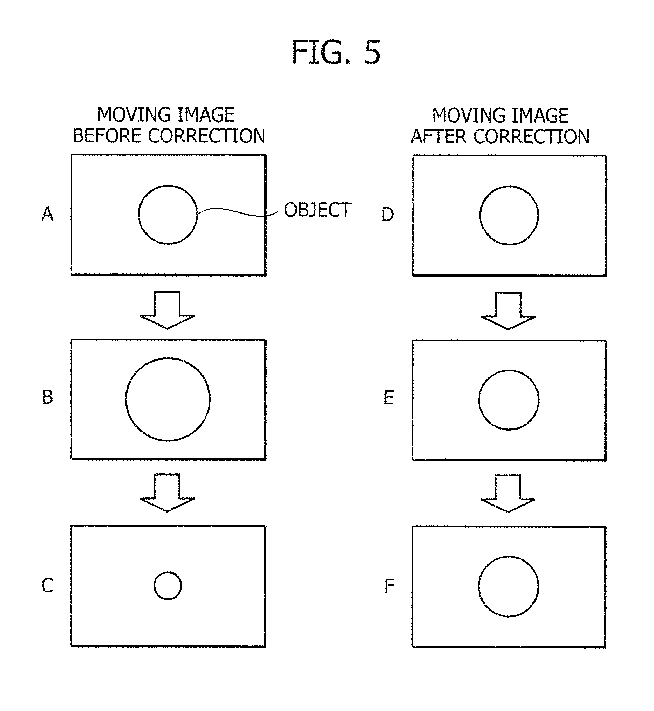

Figs. 5A to 5F show an example of scaling correction for a moving image signal. For example, while capturing a moving image of the whole ground in which a number of students make performances at a sports festival, the parent wishes to capture still images of their child in large size. In this case, a user captures a still image by zooming up from the angle of view at which the moving image is captured, and thereafter zooms out. With this operation, the moving image is also zoomed up from the state shown in Fig. 5A to the state shown in Fig. 5B, and thereafter zoomed out to the state shown in Fig. 5C. Since the user does not intend zooming of the moving image, scaling correction may be performed such that the angle of view during reproduction of the moving image is kept constant. Specifically, for example, when the image shown in Fig. 5D is used as a reference, the moving image zoomed up as shown in Fig. 5B may be scaled down as shown in Fig. 5E and the view of angle may be matched with that of the reference image shown in Fig. 5D. Further, the moving image zoomed out as shown in Fig. 5C may be scaled up as shown in Fig. 5F, and the view of angle may be matched with that of the reference image shown in Fig. 5D. If the background becomes insufficient by scale down caused by scaling correction, pixels of the background may be interpolated from, e.g., preceding and succeeding frames.

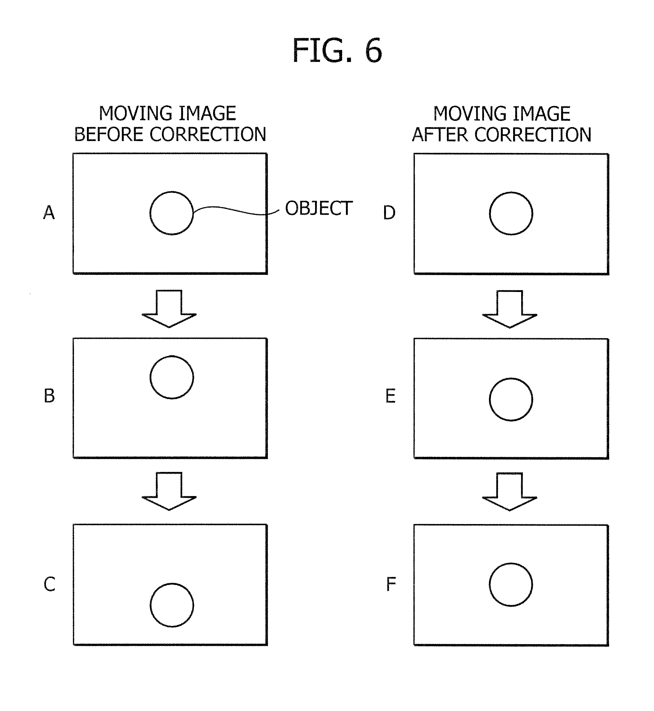

Figs. 6A to 6F show an example of imaging position correction with respect to the moving image signal. For example, although camera shake may be avoided by devising a posture while capturing a moving image for relatively long hours, the position of an object in the image may be misaligned in some cases. In other words, as shown in Figs. 6A, 6B and 6C, the object may move up, down, right and left in the image when the image is captured for long hours. The moving image can be corrected by imaging position correction such that the object constantly positions at a same location in the image. Specifically, when the image shown in Fig. 6D is used as a reference image and the object is positioned more above than the reference image as shown in Fig. 6B, the whole image may be shifted downward to make the position of the object to be coincident with that of the reference image of Fig. 6D, as shown in Fig. 6E. Further, if the object is positioned more below than the reference image as shown in Fig. 6C, the whole image may be shifted upward to make the position of the object to be coincident with that of the reference image of Fig. 6D, as shown in Fig. 6F. In Figs. 6A to 6F, although the imaging position is corrected along an up/down direction, the imaging position may be corrected also along a right/left direction or in an oblique direction.

Reverting to Fig. 3, the storage unit 58 stores the moving image signal and still image signal which are the edition results of the edit processing unit 54, and also stores various setting values (hereinafter referred to as an editing parameter) in an editing process.

The reproducing unit 59 reproduces the edited moving image signals and still image signals stored in the storage unit 58, and displays the reproduced signals on the screen of the display apparatus 14. The reproducing unit 59 may reproduce the moving image signals and still image signals read from the recording medium 12 by the media drive 53 and can display the reproduced signals on the screen of the display apparatus 14.

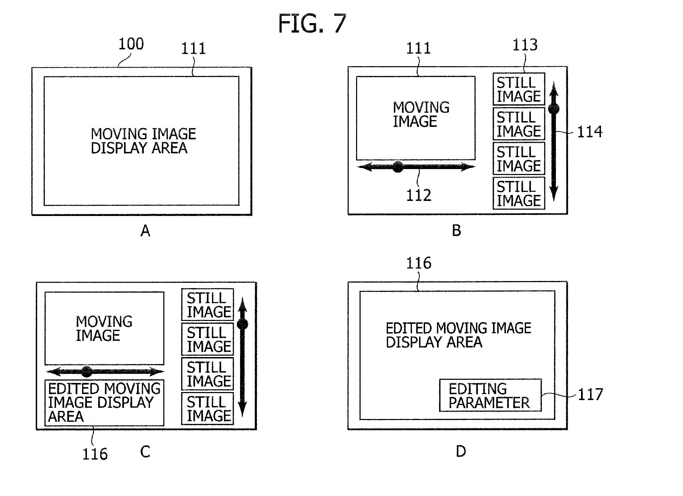

Next, with reference to Figs. 7A to 7D and Figs. 8A to 8C, description will be made on a display example when a pair of corresponding moving image signals and still image signals edited by the recording/reproducing editing apparatus 13 is displayed on the display apparatus 14.

Fig. 7A shows a state that a whole screen 100 is used as a moving image display area 111. Fig. 7B shows a state that the screen 100 is provided with a moving image display area 111 and a still image display area 113 for displaying a plurality of still images. A scroll bar 112 provided with the moving image display area 111 indicates a time lapse of the moving image and functions as a GUI. A user operates the scroll bar 112 to move a reproduction point of the moving image. A scroll bar 114 provided with the still image display area 113 indicates a position in a context of time of still images displayed on the screen among a plurality of still images corresponding to the moving image and functions as a GUI. A user operates the scroll bar 114 to change still images to be displayed.

In Fig. 7B, a user can designate one of the moving image and the still image as a main image, and the other as a sub image. As a user selects an image designated as the main image, the image designated as the sub image is changed in accordance with the reproduction timing of the selected main image. For example, assuming that the still images are designated as the main image and the moving image is designated as the sub image, as the user selects any still image out of a plurality of still images displayed in the still image display area 113, the reproduction point of the moving image displayed in the moving image display area 111 is moved to the imaging timing of the selected still image. Conversely, assuming that the moving image is designated as the main image and the still images are designated as the sub image, as the user selects (clicks, et al) the moving image displayed on the moving image display area 111, a display in the still image display area 113 is changed to still images corresponding to the reproduction point of the selected moving image.

Therefore, the user can search quickly, for example, still images corresponding to the significant (important) point of the moving image while viewing the moving image. Conversely, the user can search quickly the reproduction point of the moving image corresponding to the significant (important) still image.

Fig. 7C shows a state that in addition to the display example shown in Fig. 7B, an edited moving image display area 116 is provided. Fig. 7D shows a state that the whole screen 100 is used as an edited moving image display area 116. As shown in Fig. 7D, when the whole screen 100 is used as the edited moving image display area 116, an editing parameter 117 is displayed in a manner superposed on the edited moving image.

Fig. 8A shows a state that in addition to the display example of Fig. 7B, an edition setting area 121 is provided. Fig. 8B shows a display example of the edition setting area 121 when camera shake correction is made as the editing on a moving image signal. In Fig. 8B, a solid line indicates a camera shake locus appearing on the moving image signal, and a broken line indicates a setting state of camera shake correction. A user can change the broken line shape (slope, curvature, start point, end point, and the like) as desired so that settings of camera shake correction may be changed.

Fig. 8C shows a display example of the edition setting area 121 when scaling correction is made as the edition for a moving image signal. In Fig. 8C, a solid line indicates a locus of a change in a focal distance when a moving image is captured, and a broken line indicates a setting state of scaling correction. A user can change the broken line shape (slope, curvature, start point, end point, and the like) as desired so that settings of scaling correction can be changed.

Figs. 7A to 7D and Figs. 8A to 8C are only the display examples of the screen. The position, size and the like of the moving image display area 111, the position of the still image display area 113 and the number of still images to be displayed, sizes are not limited to those shown in Figs. 7A to 7D and Figs. 8A to 8C.

Next, with reference to a flow chart shown in Fig. 9, description is made on a reproducing process (hereinafter referred to as contents reproducing process) by the reproducing/recording editing apparatus 13. In the following, a pair of correlated moving image signals and still image signals is referred to as contents pair, and the contents are also referred to as contents Xv and Xp (X may be any character).

The contents reproducing process starts when a user performs an operation to command start of reproduction of contents.

As Step S1, the control unit 51 of the reproducing/recording editing apparatus 13 determines whether a user commands a sync reproduction (reproduction for displaying a moving image and still images by correlating the images) or a normal reproduction (reproduction for displaying either a moving image or still images). If it is determined that the sync reproduction is commanded, the process advances to Step S2, whereas if it is determined that the normal reproduction is commanded, the process advances to Step S12.

If the user commands the sync reproduction, at Step S2, the control unit 51 presents a list of contents pairs recorded in the recording medium 12 to the user so that the user selects contents pair to be subjected to sync reproduction. Then, the selected contents pair is read by the media drive 53 to be supplied to the reproducing unit 59. The selected contents pair is represented as contents Av and Ap.

At Step S3, the reproducing unit 59 determines whether the supplied contents pair has link information (information indicating a correlation between imaging timings). If it is determined that the link information is not included, the process advances to Step S4. At Step S4, the matching processing unit 55 of the edit processing unit 54 generates the link information for the selected contents pair, and outputs the link information to the reproducing unit 59 via the storage unit 58. If it is determined at Step S3 that the supplied contents pair has the link information, the process of Step S4 is omitted.

At Step S5, the reproducing unit 59 determines whether at least one of the contents Xv and Xp constituting the contents pair has an editing parameter (i.e., whether at least one of the contents is already edited). If it is determined that the editing parameter is included, the process advances to Step S6.

At Step S6, the reproducing unit 59 reproduces the contents pair based on the editing parameter. In other words, a state that the editing result (various correction processes) is reflected on the contents pair, for example, is displayed on the display apparatus 14, as the display example shown in Fig. 7C.

At Step S7, the control unit 51 determines whether there is a user operation commanding switch between the main images and sub images of the contents pair, and if it is determined as operation is performed, then at Step S8, the main image and sub images are switched. Namely, if the content Av (moving image) has been set as the main image and the content Ap (still image) has been set as the sub image, then the content Ap (still image) is changed to be the main image and the content Av (moving image) is changed to be the sub image. During reproduction, the user can command to perform a trick play including a variable speed play, such as a fast forward play and a fast rewind play, and pause, with respect to the contents designated as the main image.

At Step S9, the control unit 51 determines whether reproduction of the contents pair is completed or whether a user operation is performed to command a sync reproduction stop. If it is determined that reproduction of the contents pair is not completed and that no user operation is performed, the process returns to Step S6 to continue sync reproduction. If it is determined at Step S9 that reproduction of the contents pair is completed or that the user operation is performed, the content reproduction process is completed.

If it is determined at Step S5 that none of the contents Xv and Xp constituting the contents pair contain the editing parameter (none of the contents are edited), the process advances to Step S10. At Step S10, the reproducing unit 59 reproduces the non-edited contents pair. Namely, the display apparatus 14 is made to display a screen, for example, such as the one of the display example shown in Fig. 7B. Also at Step S10, the user can switch between the main image and sub image of the contents pair.

At Step S11, the control unit 51 determines whether reproduction of the contents pair is completed or whether a user operation of commanding a sync reproduction stop is performed. If it is determined that reproduction of the contents pair is not completed and that user operation is not performed, the process returns to Step S10 to continue sync reproduction. If it is judged at Step S11 that reproduction of the contents pair is completed or that the user operation is performed, the contents reproduction process is completed.

On the other hand, when the user commands a normal reproduction, then at Step S12, the control unit 51 presents a list of contents recorded in the recording medium 12 to a user so that the user selects the contents to be normally reproduced, and the selected contents are supplied to the reproducing unit 59. The selected contents are referred to as contents B (a moving image signal or a still image signal).

At Step S13, the reproducing unit 59 determines whether the contents B include an editing parameter (i.e., whether the content is already edited). If it is determined that the editing parameter is included, the process advances to Step S14.

At Step S14, the reproducing unit 59 reproduces the content B, based on the editing parameter. Namely, the display apparatus 14 displays a screen, such as the one in the display example shown in Fig. 7D.

If it is determined at Step S13 that the contents B do not include the editing parameter (the content B is not edited), the process advances to Step S15. At Step S15 the reproducing unit 59 reproduces the non-edited contents B. Namely, the display apparatus 14 is made to display the screen such as the one in the display example shown in Fig. 7A, for example.

At Step S16, the control unit 51 determines whether reproduction of the contents B is completed or whether a user operation commanding a normal reproduction stop is performed. If it is determined that reproduction of the contents B is not completed and that user operation is not performed, the process returns to Step S13 and the normal reproduction is continued. If it is determined at Step S16 that reproduction of the contents B is completed or that the user operation is performed, the content reproducing process is completed. The above is all for describing content reproducing process.

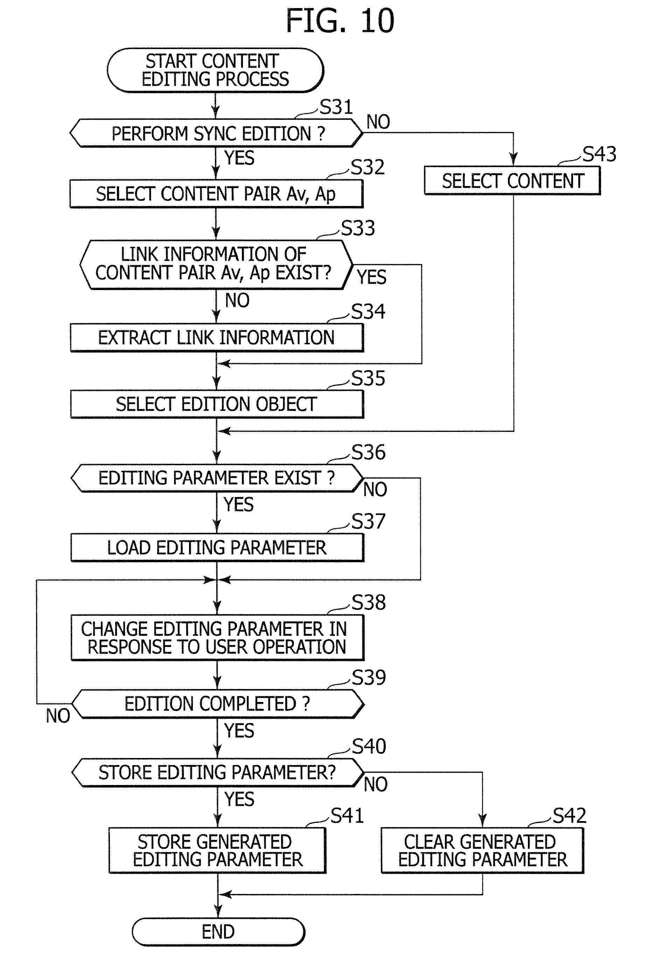

Next, with reference to a flow chart shown in Fig. 10, description is made on a content editing process by the reproducing/recording editing apparatus 13. The content editing process starts when a user performs an operation of commanding a content edition start.

As Step S31, the control unit 51 of the reproducing/recording editing apparatus 13 determines whether a user commands a sync edition (editing in a state that a moving image and still images are correlated and displayed) or a normal edition (editing in a state that either one of a moving image and still images is displayed). If it is determined that the sync edition is commanded, the process advances to Step S32, whereas if it is determined that the normal edition is commanded, the process skips to Step S36.

If the user commands the sync edition, at Step S32, the control unit 51 presents a list of contents pairs recorded in the recording medium 12 to a user to make the user select contents pair to be subjected to sync edition, and makes the media drive 53 read the selected contents pair so that the read contents pair is supplied to the editing processing unit 54. The selected contents pair is represented by contents Av and Ap.

At Step S33, the editing processing unit 54 determines whether the supplied contents pair has link information. If it is determined that the link information is not included, the process advances to Step S34, and the matching processing unit 55 generates link information for the contents pair. If it is determined at Step S33 that the link information is included in the supplied contents pair, the process at Step S34 is omitted.

At Step S35, the control unit 51 makes the user select one of the contents Av and Ap constituting the contents pair, for editing.

At Step S36, the editing processing unit 54 determines whether the selected contents (content Av or content Ap) to be subjected to edition includes an editing parameter (i.e., whether the content is already edited and its edition result is stored). If it is determined that the editing parameter is included, the process advances to Step S37. At Step S37, the editing processing unit 54 loads the editing parameter in the moving image editing unit 56 or still image editing unit 57 depending on whether the selected content is the moving image or still image. In the following, description is continued by assuming that the selected content to be subjected to edition is the moving image signal and that the existing editing parameter is loaded in the moving image editing unit 56.

In accordance with the loaded editing parameter, the moving image editing unit 56 corrects the content Av of the contents pair, and outputs the correction result to the reproducing unit 59 via the storage unit 58. On the other hand, the still image editing unit 57 outputs the contents Ap of the contents pair to the reproducing unit 59 via the storage unit 58. The reproducing unit 59 makes the display apparatus 14 display the content pair inputted via the storage unit 58, on the screen, for example, including the edition setting area 121 such as the one shown in Fig. 8A.

Under the control of the control unit 51 corresponding to a correction setting operation by a user utilizing, for example, the edition setting area 121 on the screen, at Step S38, the moving image editing unit 56 changes the editing parameter and performs an editing process (various corrections) for the content Av in accordance with the changed editing parameters. Specifically, this editing process is image signal processing, such as image quality improvement correction (camera shake correction, motion blur correction, out-of-focus blur correction, noise elimination correction, color tone correction, and resolution conversion correction), scaling (scale up/scale down) correction, rotation correction, imaging position correction, and imaging timing correction. The edition results are immediately reflected on the moving image on the screen of the display apparatus 14.

At Step S39, the control unit 51 determines whether a user operation commanding an edition end is performed, and the process returns to Step S38 until the user operation commanding the end of the edition is performed, and edition is continued. If the user operation commanding the edition end is performed, the process advances to Step S40.

At Step S40, the control unit 51 operates to display on the screen, for example, "store edition result? "YES" or "NO"" to make the user select whether the editing parameter indicating the edition result is stored. If the user agrees to store the editing parameter, the process advances to Step S41, and the present editing parameter changed by the process at Step S38 is correlated with the content Av and recorded in the recording medium 12. Conversely, if the user does not agree to store the editing parameter, the process advances to Step S42, and the present editing parameter changed by the process at Step S38 is cleared. The above is all for describing contents editing process.

If it is determined at Step S31 that the user commands a normal edition, the process advances to Step S43. At Step S43, the control unit 51 presents a list of contents recorded in the recording medium 12 to a user to make the user select the content to be subjected to the normal edition. Thereafter, the process advances to Step S36 to perform processes similar to those for the sync edition. The above is all for describing about content editing process.

As described above, according to the recording/reproducing editing apparatus 13 of the image processing system 1 to which the present invention is applied, the moving image and still images captured in parallel may be reproduced in a correlated manner, and editing (correction process) may be performed based on either one or both of the moving image and the still images and the images may be displayed.

A series of processes may be executed by hardware or by software. If a series of processes are executed by software, the program constituting the software is installed from a program recording medium to a computer having dedicated hardware assembled therein, or, for example, to a general-purpose personal computer capable of executing various functions by installing various programs.

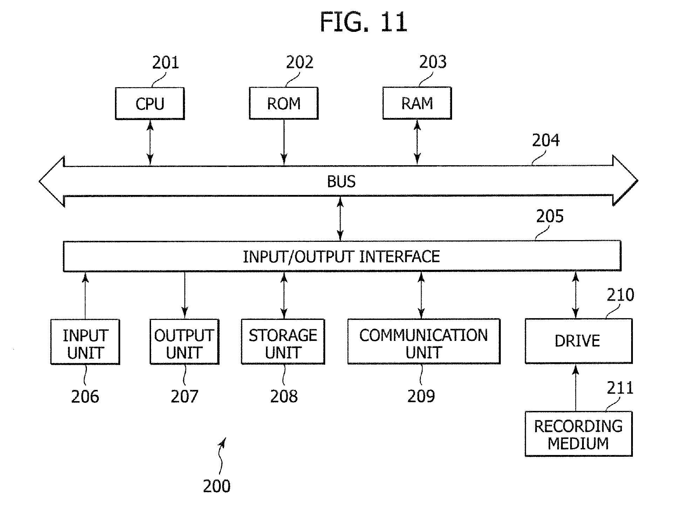

Fig. 11 is a block diagram showing the hardware structure of a computer for executing the series of processes by the program.

In the computer 200, a Central Processing Unit (CPU) 201, a Read Only Memory (ROM) 202 and a Random Access Memory (RAM) 203 are mutually connected via a bus 204.

An input/output interface 205 is also connected to the bus 204. The input/output interface 205 is connected with an input unit 206 constituted of a keyboard, a mouse, a microphone, and the like, an output unit 207 constituted of a display, a speaker, and the like, a storage unit 208 constituted of a hard disk, a nonvolatile memory, and the like, a communication unit 209 constituted of a network interface, or the like, and a drive 210 for driving a recording medium 211, such as a magnetic disc, an optical disc, a magnetic optical disc, and a semiconductor memory.

In the computer constructed as above, the series of processes are executed in such a manner that, for example, CPU 201 loads the program stored in the storage unit 208 in RAM 203 via the input/output interface 205 and bus 204, and executes the program.

The program to be executed by the computer may be a program in which processes are preformed in time series sequentially in the order described in this specification, or may be a program in which processes are performed in parallel or at a necessary timing, such as when the program is called.

The program may be executed by a single computer, or may be executed in a distributed manner by a plurality of computers. The program may be transferred to and executed by a remote computer.

In this specification, the system means a whole apparatus constituted of a plurality of apparatuses.

The present invention is not limited to the embodiments, but various modifications are allowable without departing from the gist of the present invention.

It should be understood by those skilled in the art that various modifications, combinations, subcombinations and alterations may occur depending on design requirements and other factors insofar as they are within the scope of the appended claims or the equivalents thereof.

The present document contains subject matter related to Japanese Patent Application No.2007-161534 filed in the Japanese Patent Office on June 19, 2007, the entire content of which being incorporated herein by reference.

## Claims

1. An image signal processing apparatus for controlling display of a moving image and a still image, comprising:
obtaining means for obtaining a moving image content constituted of a moving image and a still image content constituted of one or more still images;
generating means for generating link information indicating a correlation between imaging timings of the moving image content and the still image content; and
reproducing means for displaying the moving image content and the still image content correlated each other on a same screen, based on the link information.

2. The image signal processing apparatus according to claim 1, wherein;
the generating means generates the link information based on a degree of similarity between the still image of the still image content and each frame image of the moving image content.

3. The image signal processing apparatus according to claim 1 or 2, wherein;
in accordance with the link information, the reproducing means displays one of the moving image content and the still image content designated as a main image and the other designated as a sub image corresponding to a reproducing timing of the main image, on the same screen.

4. The image signal processing apparatus according to any of claims 1 to 3, further comprising:
image correction processing means for performing an image correction process on either one of the moving image content and the still image content, by using the moving image content and the still image content.

5. The image signal processing apparatus according to claim 4, further comprising:
setting means for setting a correction parameter for the image correction process.

6. An image signal processing method for an image signal processing apparatus for controlling display of a moving image and a still image, comprising steps of:
obtaining a moving image content constituted of a moving image and a still image content constituted of one or more still images;
generating link information indicating a correlation between imaging timings of the moving image content and the still image content; and
displaying the moving image content and the still image content correlated with each other on a same screen, based on the link information.

7. A program for controlling an image signal processing apparatus which controls display of a moving image and a still image, the program causing a computer to execute processes including steps of:
obtaining a moving image content constituted of a moving image and a still image content constituted of one or more still images;
generating link information indicating a correlation between imaging timings of the moving image content and the still image content; and
displaying the moving image content and the still image content correlated with each other on a same screen, based on the link information.

8. An image signal processing apparatus for controlling display of a moving image and a still image, comprising:
obtaining section for obtaining a moving image content constituted of a moving image and a still image content constituted of one or more still images;
generating section for generating link information indicating a correlation between imaging timings of the moving image content and the still image content; and
reproducing section for displaying the moving image content and the still image content correlated each other on a same screen, based on the link information.
